# EUROPEAN PATENT APPLICATION

(11) **EP 2 154 768 A2**
(43) Date of publication of application: **17.02.2010**
(21) Application number: 09166914.3
(22) Date of filing: 31.07.2009
(51) Int. Cl.: H02K 5/15

(54) **A stator and method of making the same**

(30) Priority: 12.08.2008 US 190197
(71) Applicant: General Electric Company, Schenectady, NY 12345 (US)
(72) Inventor: Ramy, Gannon, Fort Wayne, IN 46804 (US); Phansalkar, Bansidhar Jagannath, Fort Wayne, IN Indiana 46802 (US); Bruin, Michael, Fort Wayne, IN indiana 46802-4332 (US); Perdue, Trevor, Fort Wayne, IN Indiana 46825 (US); Rai, Mandar Ranganath, 500028, Pradesh (IN); Gupta, Sanjay, 500009, Pradesh (IN)
(74) Representative: Illingworth-Law, William Illingworth

(57) **Abstract**

The present disclosure describes an endcap assembly (208, 210) for a stator (200) of an electric motor having a stator winding. The endcap assembly (208, 210) has a dielectric material (304), and a plurality of connection paths (302) each being supported by the dielectric material (304) and each intervening between each turn of the stator winding wherein the connection paths (302) are configured to communicate with each terminal end (804, 806) of a stator conductor (306). A method of making a stator is also provided.

## Description

### BACKGROUND OF THE INVENTION

The present invention relates to electric motors. More specifically, the present invention relates to a stator for an electric motor.

Stators are normally formed of a series of thin, flat plates or laminations stacked to form a solid body stack or core. Coils or windings are positioned in pre-formed slots in the plates, extending through the stack, with ends of the coils looping at each end of the stack to form end turns for a continuous closed circuit electrical path.

Manufactures have developed stators with differing conductor winding segments, which are analogous to the above-mentioned coil loops at each end of the stack. For example, a method of manufacturing a stator having a stator winding formed by a plurality of U-shaped conductor segments is described in JP-B2-3196738. In this example, the U-shaped conductor segment has a pair of conductors inserted into slots formed in a stator core. One conductor of the U-shaped conductor segment is inserted into one slot, while the other conductor is inserted into another slot which is apart from the one slot by a pole pitch. After plural conductor segments are all inserted into the slots, axial ends of conductors are connected to one another forming a stator winding.

An L-shaped conductor segment has also been described in JP-A-2001-37131, which describes a stator having a stator winding formed by plural L-shaped conductor segments. The L-shaped conductor segments are inserted into slots of the stator core from both axial ends thereof. Then, axial ends of the L-shaped conductor segments are electrically connected to one another to form a stator winding.

Recently, manufactures have begun using rod shaped chips for conductor segments. For instance, U.S. Patent 6,548,933 describes sandwiching a stator tooth portion to adjacent slots. Using a thin plate rod shape chip between both ends of U-shape side of the coil, the coil is connected and the coil is formed to have one winding close circuit. The plural coils are inserted between the both ends of an anti-U-shape side is connected, and a stator coil for forming a predetermined winding turn number is obtained.

However, none of the above mentioned descriptions sufficiently reduce the amount of necessary conductive material or sufficiently decrease the costs of production. Furthermore, none of the above descriptions have sufficient flexibility for configuring the motor windings into a multitude of electrical design configurations.

Accordingly, to date, there is no suitable endcap assembly or method for sufficiently reducing the amount of conductive material used in the production of stator cores.

### BRIEF DESCRIPTION

The present disclosure describes an endcap assembly for a stator of an electric motor, and a method of making a stator.

In an embodiment of the present invention, the endcap assembly comprises a dielectric material and a plurality of connection paths each being supported by the dielectric material and each intervening between each turn of the stator winding and wherein the connection paths are configured to communicate with each terminal end of a stator conductor.

In another embodiment of the present invention, the invention provides a method of making a stator for an electric motor comprising providing a stator core having a plurality of conductor winding slots, locating a plurality of conductor windings into the stator core, each conductor winding have at least one terminal end, and providing at least one endcap assembly and connecting the at least one endcap assembly at a first and second side of the stator core, wherein the connection paths are configured to communicate with each terminal end of a stator conductor thereby forming a continuous conductor winding. The endcap assembly comprises a dielectric material and a plurality of connection paths each being supported by the dielectric material and each intervening between each turn of the stator winding.

Other features and advantages of the disclosure will become apparent by reference to the following description taken in connection with the accompanying drawings.

### BRIEF DESCRIPTION OF THE DRAWINGS

Reference is now made briefly to the accompanying drawings, in which:
Figure 1 is a perspective view of a stator core comprising stator laminations in accordance with an aspect of the present invention.
Figure 2 is a front view of a stator to which embodiments of the present invention relate.
Figure 3 is a perspective view of a portion of an endcap assembly disposed within a substrate to which embodiments of the present invention relate.
Figure 4 is a side view of an endcap assembly to which embodiments of the present invention relate
Figure 5 is a top view of an endcap assembly to which embodiments of the present invention relate.
Figure 6 is a perspective view of an endcap assembly attached to a stator.
Figure 7 is a flow chart describing a step-wise method in accordance with a further embodiment of the present invention.
Figure 8 is a diagram showing exploded view a stator and endcap assemblies.

Like reference characters designate identical or corresponding components and units throughout the several views, which are not to scale unless otherwise indicated.

### DETAILED DESCRIPTION

One embodiment of the present invention involves an endcap assembly which comprises a substrate and a plurality of connection paths each intervening between each turn of a stator winding, which in turn, allows for electrical communication between the connection paths and the terminal ends of the stator conductor. Two particular advantages afforded by this invention is the ability to manufacture stator cores using substantially less superfluous conduction material (e.g., magnet wire) in the endturns of a stator, and the ability to allow for a single endcap assembly to be used with a myriad of different stator conductor configurations, each of which may be applicable to a number of different stator design requirements.

Specific configurations and arrangements of the claimed invention, discussed below with reference to the accompanying drawings, are for illustrative purposes only. Other configurations and arrangements that are within the purview of a skilled artisan can be made, used, or sold without departing from the spirit and scope of the appended claims. For example, while some embodiments of the invention are herein described with reference to an electric motor, a skilled artisan will recognize that embodiments of the invention can be implemented in any setting in which acute electrical turns are desirable.

As used herein, an element or function recited in the singular and proceeded with the word "a" or "an" should be understood as not excluding plural said elements or functions, unless such exclusion is explicitly recited. Furthermore, references to "one embodiment" of the claimed invention should not be interpreted as excluding the existence of additional embodiments that also incorporate the recited features

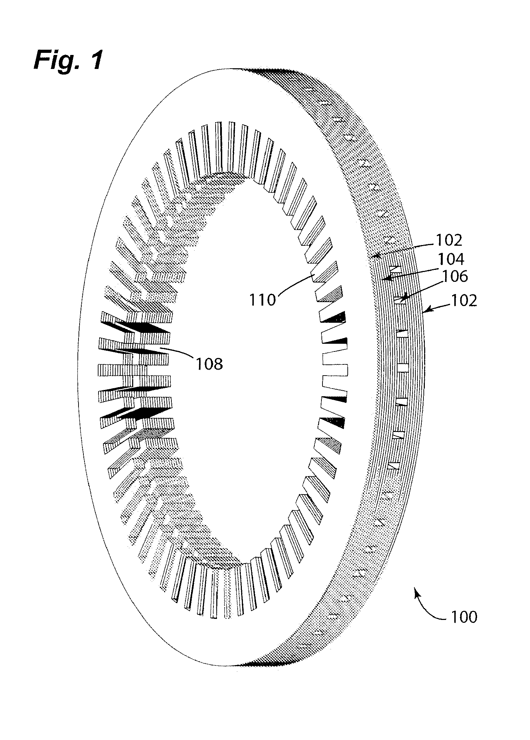

Referring now to Figure 1, in accordance with aspect of the present invention, a stator laminated core is shown generally at 100. The laminated core 100 may comprise a plurality of stator laminations 102, and may optionally comprise stator inner vent laminations 104, and stator outer vent laminations 106. It will be appreciated that the laminated core 100 may be employed together with the laminated core 10 in e.g., a motor. Also, it will be understood that, optionally, either of the laminated cores 10 and 100 may be employed separately in, e.g., a motor frame.

The stator laminated core may comprise conductor wiring slots 108 disposed between conductor wiring teeth 110. The stator lamination core may be configured to accommodate at least one embedded conductor in the form of conductor windings (not shown).

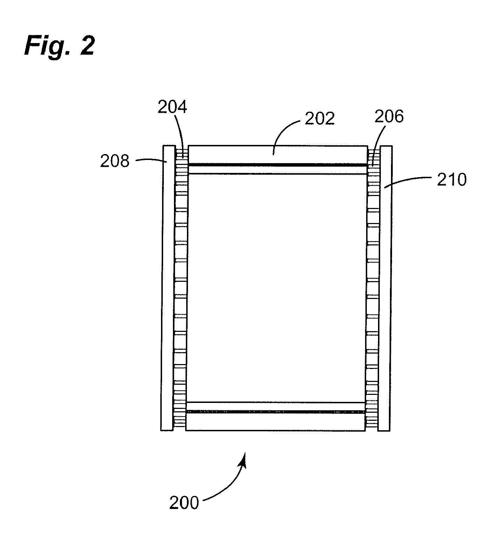

Referring now to Figure 2, a completed stator is shown generally at 200. The completed stator 200 comprises a stator core 202, stator conductors 204 and 206, and endcap assemblies 208 and 210.

The stator core 202 may be manufactured from e.g., steel, iron and the like. The stator core may be dimensioned to correspond to a plurality of motor sizes, and may be configured to reduce hysteresis and eddy current loss.

The stator conductors 204 may be manufactured from any conductive material, e.g., copper or aluminum. The conductors may be further electrically isolated from the iron core by, e.g., insulating paper. The stator conductors, when coupled to the stator end cap assemblies, allow for a closed circuit electrical path and, in turn, the production of a magnetic field when current is passed therethrough. In an embodiment of the present invention, the conductors may be formed into a predetermined arrangement in a stator slot, allowing a uniform, stacked, layered formation. However, in an optional embodiment, the conductors may be positioned in a random orientation, in which the conductors are randomly arranged in a stator slot. In yet another optional embodiment of the present invention, the formed or randomly arranged conductors may be precoupled to at least one endcap on one side of the stator and inserted into stator core, e.g., via an injection mechanism. The endcap assemblies 208 and 210 may attach at the terminal ends of the stator conductors.

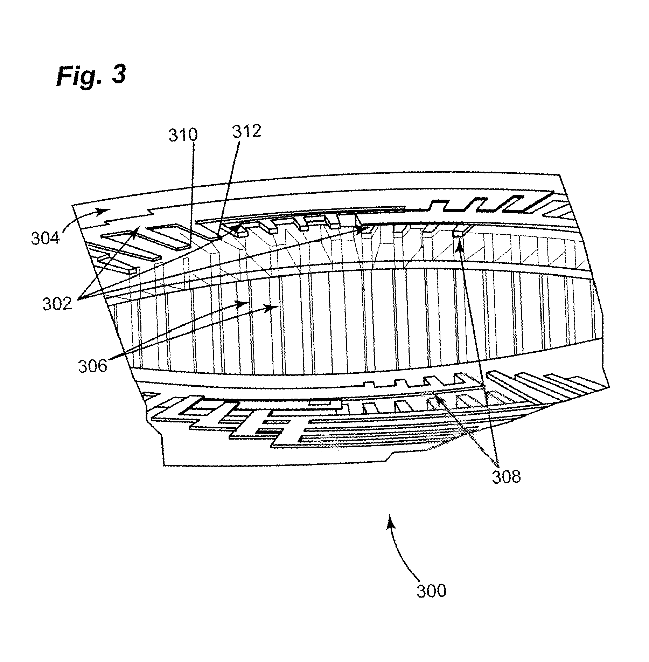

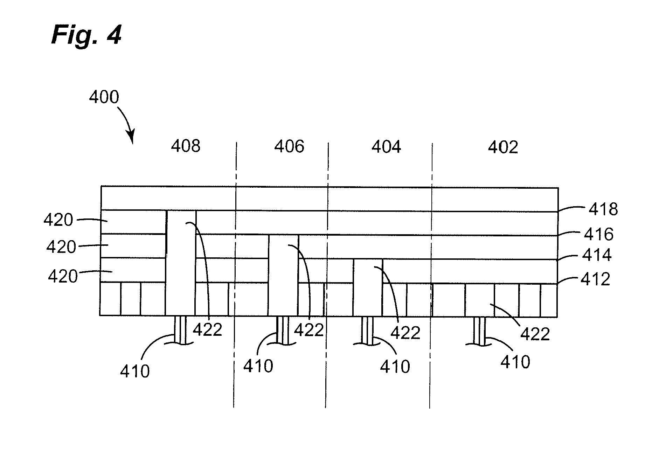

The endcap assemblies 208 and 210, which will be discussed in greater detail with reference to Figures 3 and 4, may be attached at a first and second end of the stator 200 and may be dimensioned to correspond to a first and second end of the stator 200. In an embodiment of the present invention, the endcap assemblies may be configured to electrically communicate with the terminal ends of the stator conductors 204, thereby forming a closed electrical circuit.

Now with reference to Figure 3, an exemplary endcap assembly is shown generally at 300 and comprises a plurality of connection paths 302, substrate 304, a plurality of stator conductors 306 and connection joints 308.

In an exemplary embodiment of the present invention, the connection paths 302 may be manufactured of a conductive material such as copper or aluminum. The plurality of connection paths 302 may each be intervening between each turn of the stator winding, which comprise a plurality of conductors, at 310. In turn, each connection path may be configured to communicate with each terminal end of the stator conductor 306. In other words, the connection paths may be aligned with the terminal ends of the stator conductors to complete a closed loop circuit.

With further reference to Figure 3, the dielectric material 304, may be a substrate manufactured from e.g., FR4, N5000 BT, or 33N or coated with, e.g., parylene to provide an insulating channel between the connection paths and their environment. The dielectric material 304, in effect, may act as a housing for the internal connection paths 302 and the terminal ends of the stator conductors that may reside there. The dialectic material may also provide stiffness necessary in a multitude of electrical design configurations. In an optional embodiment, an encapsulate may be provided as a dielectric material. The encapsulate may be an epoxy resin suitable in electrical applications. In a further optional embodiment of the present invention, the dielectric material may comprise an outer periphery surface configured to protect each endcap assembly on the stators outermost sides.

At connection point 312, the connection paths may reside in a plane that approximately orthogonal to a longitudinal axis of each stator conductor 306, while further residing circumferentially along an inner surface of the dielectric material 304. In optional embodiments of the present invention, the connection paths may be configured in a layered formation as required by motor performance design, which will be discussed in greater detail with reference to Figure 4. The connection point 312 may further comprise a bonding portion (not shown) where the electrical connection between the connection paths and the stator conductors are made. The bonding portion may comprise any advantageous connection assembly, e.g., a braze joint, a solder joint, a spring clip, a compression pin, a bolted connection, contacts, friction stir welds, and the like.

Referring now to Figure 4, a side view of an endcap assembly is shown generally at 400. The endcap assembly may be configured in a layered formation. By "layered" is meant that connection paths may reside in separate planes circumferentially around the endcap. Also, there may be intervening layers of dielectric insulating material to both insulate each connection path and provide support for the connection paths as well. This exemplary endcap embodiment allows for a single endcap to be used with a myriad of different stator conductor configurations, each of which may be applicable to a number of different stator design requirements. For example, in a first optional embodiment 402, the stator conductors 410 may connect at a first tier connection path 412. In other optional embodiments 404, 406, and 408, the stator conductors may connect at connection paths 414, 416 and 418 respectively via bonding portions 422. Intervening layers of a dielectric material 420, e.g., a substrate or epoxy resin encapsulate, may be layered between each layered connection path to electrically isolate each connection path.

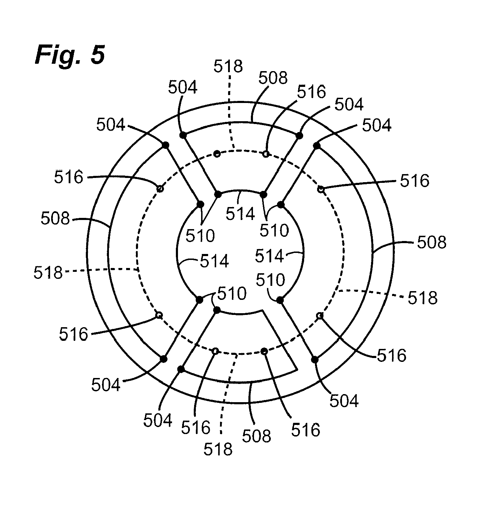

In another embodiment of the present invention, the endcap assembly may comprise a heavy copper printed circuit board. Figures 5 shows a top view of an endcap assembly comprising traces 504 that may etched or plated onto a substrate 502, e.g., heavy copper. Heavy copper may comprise any circuit with a copper weight in excess of 4oz./ft². The traces may be light copper and interlinked with heavy copper tracks. The substrate may cylindrically dimensioned and comprise a middle aperture 520, the size and shape of which may be predetermined to correspond to stator design requirements.

In this exemplary embodiment of the present invention, the circuit board may be layered, and thus may comprise external traces 504, connected via line 508, and internal traces 510 connected via line 514. While, as shown, the exemplary circuit is a two-layer circuit board, it is to be appreciated that a plurality of layers may be envisioned to match a plurality of stator conductor and motor configurations. For example, the endcap may include internal traces 516 connected via line 518 disposed circumferentially around the endcap, in a plane that is below the internal traces 510. Furthermore, the endcap may include cotraces (not shown) for making electrical connections from layer to layer. This exemplary arrangement may also allow for a single endcap to be used with a myriad of different stator conductor configurations, each of which may be applicable to a number of different stator design requirements.

It is to be appreciated that each embodiment of the stator core and endcap assembly may further comprise a connector for insertion of an external power source (not shown) for providing power to the stator.

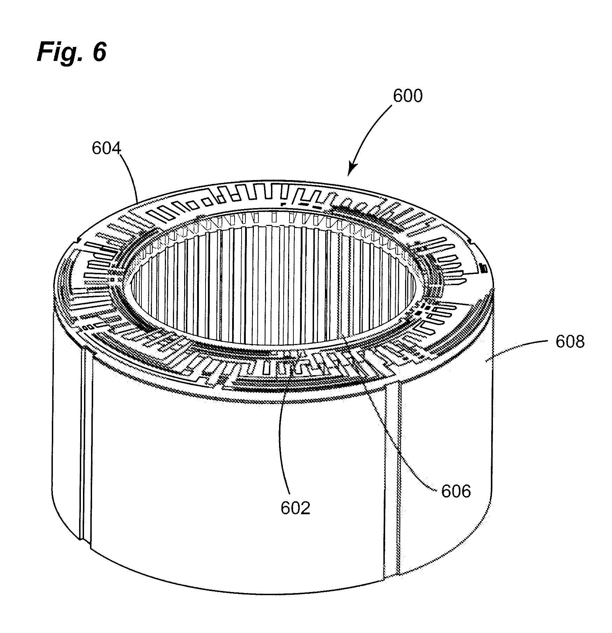

Referring now to Figure 6, a perspective view of an endcap assembly attached to a stator is shown generally at 600 to more clearly illustrate the present invention. In this embodiment of the present invention, the stator assembly comprises connection paths 602, dielectric material 604, stator conductors 606, and stator frame 608. The connection paths 602 together with bonding portions (not shown) may permit an approximately 90 degree electrical connection between the each stator conductor 606, and therefore in each stator winding thereby substantially reducing the amount of stator conductor material necessary to form a complete stator winding for a closed circuit. Furthermore, this embodiment of the present invention houses the endtums of the stator thereby substantially decreases damage at the endtums. In an optional embodiment of the present invention, the connection paths 602 may be oriented in a plane that is angled or arched with respect to other connection paths thereby preventing separate electrical paths from contacting one another.

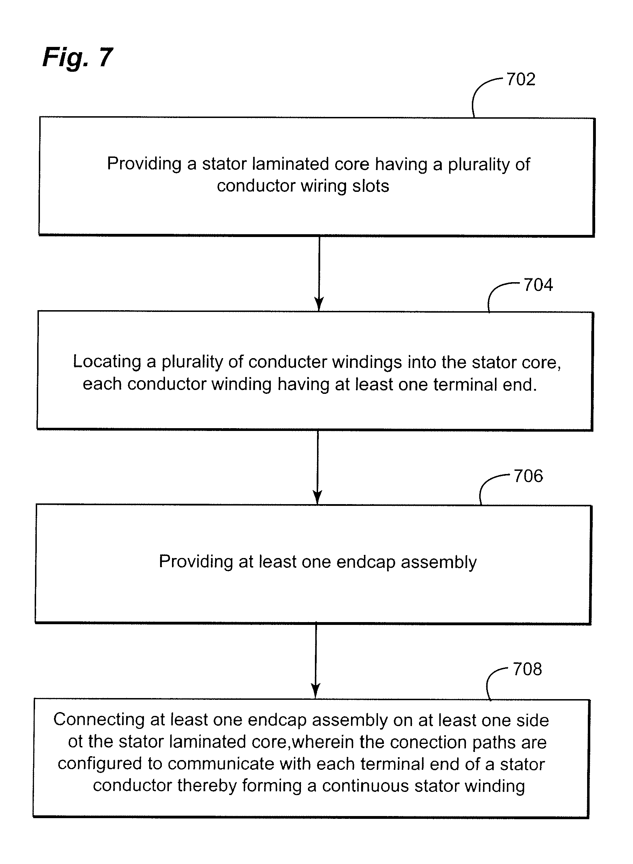

Referring now to Figure 7, a method for making a stator for an electric motor is provided generally at 700. The flowchart is shown to better help illustrate this exemplary method. While the flowchart shows an exemplary step-by-step method, it is to be appreciated that a skilled artisan may rearrange or reorder the steps while maintaining like results.

Providing a stator laminated core having a plurality of conductor winding posts 702 may comprise a combination of stator laminations, such as those shown in Figure 1. The stator laminated core may be formed by stacking a plurality of stator laminations to form a core, each held together via cleats, staples, welds, and the like. On the inner circumferential surface of the core there may be a plurality of stator teeth mounted to the core. The stator teeth may comprise winding slots, which may be dimensioned to correspond to stator conductor wires.

Locating a plurality of conductor windings into the stator core, each conductor winding have at least one terminal end 704 may comprise providing formed individual rectangle wires dimensioned to correspond to winding slots in a stator core, allowing for a uniform, stacked, layered formation. However, in an optional embodiment, the conductors may be positioned randomly, in which the conductors are randomly arranged within the stator slot. In yet another optional embodiment of the present invention, the formed or randomly arranged conductors may be precoupled to at least one endcap and then be inserted into the stator core post-production via auto-injection.

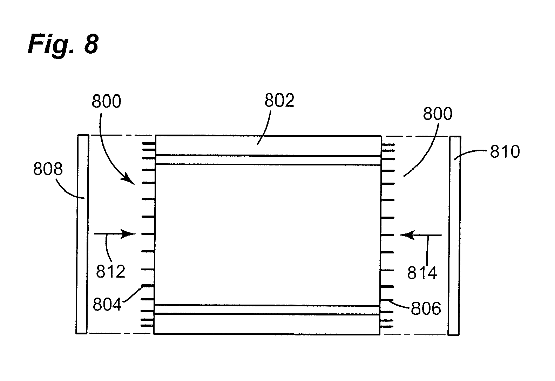

Each of the conductor windings may have at least one terminal end. What is meant by "terminal end" is that each of the conductor windings comprises an end portion wherein the winding is incomplete until the addition of an endcap assembly, which may then complete the conductor winding and form a closed loop circuit. Forming a terminal end may comprise cutting or stripping the completed windings at their outermost periphery, or inserting or injecting wires into the core that have been preformed to comprise a terminal end. The terminal end of each conductor winding may extend outside of the frame as shown in Figure 8 at 800. In this exemplary embodiment, the windings comprise two terminal ends 804 and 806, each being configured with the ability to electrically communicate with the endcap assemblies that will be attached thereto. Therefore, the terminal ends may be spaced to correspond to the plurality of connection paths of the endcap assemblies, which may in turn correspond to a plurality of winding and stator arrangements. To provide for a more simple endcap attachment, the terminal ends of the windings may be color coated to correspond to the appropriate point of attachment at an endcap, which will depend upon the winding arrangements and stator design. Other suitable methods for matching particular attachment points may include a crimped shapings on the end of the wire, e.g., a triangle, diamond, etc.

Providing at least one endcap assembly, the endcap assembly comprising a substrate and a plurality of connection paths each being supported by the substrate and each intervening between each turn of the stator winding and wherein the connection paths are configured to communicate with each terminal end of a stator conductor 706 may comprise, for example as shown in Figure 8, attachment at each end of the stator, as shown by arrows 812 and 814.

Connecting the at least one endcap assembly on at least one side of the stator core, wherein the connection paths are configured to communicate with each terminal end of a stator conductor thereby forming a continuous conductor winding 708 may comprise attachment via braze joints, a solder joints, spring clips, compression pins, bolted connections, contacts, friction stir welds, and the like.

When the endcap assemblies are attached, the terminal ends of the stator conductors and the endcap assembly connection paths connect to form a closed circuit, and complete the stator windings, as shown in Figure 3. It is thus advantageous to manufacture a substrate made of a dielectric material and is dimensioned to correspond with the ends of particular stator.

Although specific features of various embodiments of the invention may be shown in some drawings and not in others, this is for convenience only. In accordance with the principles of the invention, the feature(s) of one drawing may be combined with any or all of the features in any of the other drawings. The words "including", "comprising", "having", and "with" as used herein are to be interpreted broadly and comprehensively and are not limited to any physical interconnection. Moreover, any embodiments disclosed herein are not to be interpreted as the only possible embodiments. Rather, modifications and other embodiments are intended to be included within the scope of the appended claims.

## Claims

1. An endcap assembly (208, 210) for a stator (200) of an electric motor comprising a stator winding, the endcap assembly comprising:
a dielectric material (304); and
a plurality of connection paths (302) each being supported by the dielectric material (304) and each intervening between each turn of the stator winding and wherein the connection paths (302) are configured to communicate with each terminal end (804, 806) of a stator conductor (306).

2. The endcap assembly of claim 1, wherein the stator winding comprises a plurality of conductors (306) and wherein each connection path (302) resides in a plane that is approximately orthogonal to a longitudinal axis of each conductor (306).

3. The endcap assembly of claim 1 or claim 2, wherein the dielectric material (304) is a substrate or an epoxy, and wherein the dielectric material is intervening between a plurality of layers of connection paths (302).

4. The endcap assembly of any one of the preceding claims, wherein the endcap assembly (208, 210) comprises two endcap assemblies (208, 210), each dimensioned to correspond to a first and second end of a stator (200).

5. The endcap assembly of any one of the preceding claims, wherein the connection paths comprise copper or aluminum.

6. The endcap assembly of any one of the preceding claims, wherein the connection path comprises a plurality of connection paths (302) that reside circumferentially along an inner or outer surface of the dielectric material (304) and further reside in separate planes.

7. The endcap assembly of any one of the preceding claims, further comprising connection joints (308) having a bonding portion, the bonding portion configured to electrically connect the connection paths (302) to each of the terminal ends (804, 806) of the stator conductor.

8. The endcap assembly of any one of the preceding claims, wherein the connection joint comprises a braze joint, a solder joint, a spring clip, a compression pin, a bolted connection, contacts, or friction stir welds.

9. A method of making a stator (200) for an electric motor comprising:
providing a stator core (100) having a plurality of conductor winding slots (108);
locating a plurality of conductor windings into the stator core, each conductor winding have at least one terminal end (804, 806);
providing at least one endcap assembly (208, 210), the endcap assembly comprising:
a dielectric material (304); and
a plurality of connection paths (302) each being supported by the dielectric material (304) and each intervening between each turn of the stator winding;
connecting the at least one endcap assembly (208, 210) at a first and second side of the stator core (100), wherein the connection paths (302) are configured to communicate with each terminal end (804, 806) of a stator conductor thereby forming a continuous conductor winding.

10. The method of claim 9, wherein the stator winding comprises a plurality of conductors (706) and wherein each connection path (302) resides in a plane that is approximately orthogonal to a longitudinal axis of each conductor (706).

11. The method of claim 9 or claim 10, wherein the dielectric material (304) is a substrate or an epoxy and wherein the dielectric material is intervening between a plurality of layers of connection paths (302).

12. The method of any one of the preceding claims, wherein the endcap assembly comprises two or more endcap assemblies, each dimensioned to correspond to a first and second end of a stator.

13. The method of any one of claims 9 to 12, wherein the connection path (302) comprises a plurality of connection paths that reside circumferentially along a surface of the dielectric material (304).

14. The method of any one of claims 9 to 13, further comprising connection joints having a bonding portion, the bonding portion configured to electrically connect the connection paths to each of the terminal ends of the stator conductor.

15. The method of any one of claims 9 to 14, wherein the connection joint comprises a braze joint, a solder joint, a spring clip, a compression pin, a bolted connection, contacts, or friction stir welds.
